# EUROPÄISCHE PATENTSCHRIFT

(11) **EP 3 938 552 B1**
(45) Veröffentlichungstag und Bekanntmachung des Hinweises auf die Patenterteilung: **30.07.2025**
(21) Anmeldenummer: 20710505.7
(22) Anmeldetag: 11.03.2020
(51) Int. Cl.: C22C 9/02, C22C 9/04, C22F 1/08, C21D 7/13, B21C 23/00, B21J 5/02, B21J 13/00, B29C 48/00, F16L 13/00, F16L 33/00, F16L 41/00

(54) **VERFAHREN ZUR HERSTELLUNG VON METALLISCHEN BAUTEILEN SOWIE DADURCH HERGESTELLTES METALLISCHES BAUTEIL**
METHOD FOR PRODUCING METAL COMPONENTS AND METAL COMPONENT PRODUCED IN THIS WAY
PROCÉDÉ POUR PRODUIRE DES ÉLÉMENTS MÉTALLIQUES ET ÉLÉMENT MÉTALLIQUE PRODUIT AU MOYEN DE CE PROCÉDÉ

(30) Priorität: 11.03.2019 DE 102019106131
(43) Veröffentlichungstag der Anmeldung: 19.01.2022
(73) Patentinhaber: REHAU Industries SE & Co. KG, 95111 Rehau (DE); MG Meccanica Srl, 25080 Prevalle (BS) (IT)
(72) Erfinder: CHRISTOPH, Sven, 91085 Weisendorf/Nürnberg (DE); HAAKE, Martin, 91056 Erlangen (DE); RÖDER, Bernd, 95339 Neuenmarkt (DE); COCCHI, Sergio, 25081 Bedizzole (IT); ZAVARISE, Lorenzo, 25124 Brescia (IT); COCCHI, Stefano, 25080 Mazzano (IT)
(86) Internationale Anmeldenummer: PCT/EP2020/056415
(87) Internationale Veröffentlichungsnummer: WO 2020/182845

(56) Entgegenhaltungen:
- EP-A2- 3 581 667
- DE-A1- 102012 013 817
- DE-U1- 202008 003 352
- DE-U1- 202016 101 661
- JP-A- 2013 199 699
- US-A1- 2016 130 685

## Beschreibung

Die vorliegende Erfindung betrifft ein Verfahren zur Herstellung von Bauteilen für medienführende Gas- oder Wasserleitungen, insbesondere Fittings oder Armaturen für Trinkwasserleitungen, wobei die Bauteile zumindest teilweise aus einer bleifreien Kupferlegierung bestehen. Darüber hinaus betrifft die vorliegende Erfindung ein Bauteil für medienführende Gas- oder Wasserleitungen, insbesondere ein Fitting oder eine Armatur für Trinkwasserleitungen, das nach einem derartigen Verfahren hergestellt ist.

Bauteile für medienführende Gas- oder Wasserleitungen besitzen eine komplexe Geometrie. Wie hierin verwendet spricht man dann von einem Bauteil mit einer komplexen Geometrie, wenn das Bauteil nicht durch einen quasi-kontinuierlich ablaufenden Formgebungsprozess, wie beispielsweise das Strangpressen von Stangen oder Rohren und das Walzen von Bändern, hergestellt werden kann.

An metallische Werkstoffe für den Einsatz in Bauteilen für wasserführende, insbesondere trinkwasserführende Gewerke, wie beispielsweise Fittings, Armaturen, Rohre, Pressverbinder, Dach- oder Ablaufrinnen, sind besondere Anforderungen zu stellen. Insbesondere im Falle von mit Trinkwasser in Kontakt stehenden Bauteilen ist dabei die Korrosionsbeständigkeit zu nennen. Als eine der bedeutendsten Legierungsarten mit entsprechend hoher Korrosionsbeständigkeit für derartige Bauteile ist der Rotguss zu nennen, der jedoch den Nachteil besitzen, dass er nur unter sehr hohem Aufwand warmumformbar ist.

Für den Einsatz in der Trinkwasserinstallation findet derzeit die Rotgusslegierung CuSn5Zn5Pb2 mit Gehalten von etwa 5 Gew.-% Zinn und etwa 5 Gew.-% Zink eine breite Anwendung. Diese Kupferlegierung besitzt eine hervorragende Korrosionsbeständigkeit und ist daher in allen Wasserqualitäten innerhalb der Trinkwasserversorgung einsetzbar. Bauteile aus dieser Legierung werden gegossen und anschließend zum Endprodukt spanhebend mechanisch bearbeitet, wobei die spanabhebende mechanische Bearbeitung aufgrund der zur Langspanbildung führenden plastischen Verformbarkeit der Legierung Probleme bereitet. Um die Produkte dennoch wirtschaftlich bearbeiten zu können, werden den Legierungen Blei als spanbrechender Zusatz hinzugegeben, was eine wirtschaftliche, vollautomatisierte mechanische Bearbeitung ermöglicht. Allerdings wurden bereits in der Vergangenheit die Vorschriften für Legierungen, die in Installationen für Trinkwasser verwendet werden, hinsichtlich des Gehalts an Blei drastisch verschärft. Zukünftig ist eher mit einer weiteren Verschärfung dieser Vorschriften bis hin zu einem vollständigen Verbot von Blei in derartigen Legierungen zu rechnen.

In der Patentschrift US 8,470,101 B2 wird daher eine bleifreie Rotgusslegierung mit hoher Korrosionsbeständigkeit beschrieben, die neben Kupfer und unvermeidbaren Verunreinigungen aus 0,1 Gew.-% bis 0,7 Gew.-% Schwefel, bis zu 8 Gew.-% Zinn und bis zu 6 Gew.-% Zink besteht und in der die Aufgabe des Bleis als Spanbrecher über Schwefelphasen in Form von Sulfidpartikeln erfüllt werden. Beim Gießen des Werkstoffs kann es zu einer Lunkerbildung über die gesamte Wandstärke des Bauteils kommen, was eine Porosität des Werkstoffes bedingt, die wiederum bei der spanenden Bearbeitung zu einer Undichtheit des Bauteils führen kann. Darüber hinaus kann es in den Kavitäten zu einer Aufkonzentration von schädlichen Inhaltsstoffen des zu transportierenden Mediums kommen, was die Korrosionsbeständigkeit negativ beeinträchtigt. Weitere bleifreie Kupferlegierungen sind aus der DE 10 2012 013817 A1 und der DE 20 2016 101661 U1 bekannt. Ein Verfahren zur Herstellung von Bauteilen für medienführende Gas- oder Wasserleitungen aus einer bleifreien Kupferlegierung geht aus der nachveröffentlichten EP 3 581 667 A1 hervor.

Vor diesem Hintergrund liegt der vorliegenden Erfindung die Aufgabe zugrunde, ein Verfahren zur Herstellung von Bauteilen für medienführende Gas- oder Wasserleitungen aus einer bleifreie Kupferlegierung anzugeben, das die Nachteile des Stands der Technik überwindet. Insbesondere sollen die durch das erfindungsgemäße Verfahren erhaltenen Bauteile für medienführende Gas- oder Wasserleitungen eine hohe Korrosionsbeständigkeit und eine hohe Druckdichtigkeit aufweisen sowie mit geringem Aufwand herstellbar sein.

Diese und andere Aufgaben werden durch ein Herstellungsverfahren für ein Bauteil für medienführende Gas- oder Wasserleitungen mit den Merkmalen des Anspruchs 1 bzw. durch ein Bauteil mit den Merkmalen des Anspruchs 9 gelöst. Bevorzugte Ausführungsformen des erfindungsgemäßen Verfahrens bzw. des erfindungsgemäßen Bauteils sind in den abhängigen Ansprüchen beschrieben.

Gemäß der vorliegenden Erfindung wurde überaschenderweise erkannt, dass eine bleifreie Kupferlegierung, die als Legierungskomponenten in Gew.-% neben Kupfer (Cu) und unvermeidbaren Verunreinigungen, wobei Blei in einer Menge von nicht mehr als 0,25 Gew.-% und Nickel mit einem Nickelgehalt von maximal 0,4 Gew.-% als unvermeidbare Verunreinigungen enthalten sind, noch 3 Gew.-% bis 8 Gew.-% Zinn (Sn), 1,3 Gew.-% n bis 6 Gew.-% Zink (Zn), 0,1 Gew.-% ≤ Schwefel (S) ≤ 0,7 Gew.-% und optional bis zu 0,2 Gew.-% Phosphor (P), optional nicht mehr als 0,1 Gew.-% Antimon; sowie optional Eisen, Zirkonium und/oder Bor allein oder in Kombination von zwei oder mehr der genannten Elemente nicht mehr als 0,3 Gew.-% umfasst, einem Warmpressvorgang unterzogen werden kann. Unterzieht man einem Pressrohling aus einer derartigen Legierung einem Warmpressvorgang, findet vor allem in den oberflächennahen Bereichen des erhaltenen Werkstücks eine Kornfeinung statt, ohne dass dazu weitere Maßnahmen bei der Herstellung der Kupferlegierung oder des Pressrohlings erforderlich sind. Diese Kornfeinung in Bereichen nahe der Oberfläche des Bauteils hat zudem den Vorteil, dass das erhaltene Bauteil eine erhöhte Oberflächenhärte besitzt, was dem Bauteil eine hohe Verschleißfestigkeit verleiht, während das Bauteil als Ganzes aufgrund der größeren Korngröße im Inneren des Bauteils gute Zähigkeitseigenschaften aufweist. Dieses feinkörnige Legierungsgefüge wird überaschenderweise auch nicht durch inkohärente Bereiche gestört und kann dadurch hervorragend umgeformt werden. Darüber hinaus führt das feinkörnige Legierungsgefüge insbesondere an der Oberfläche zu einer höheren Dichtigkeit des erfindungsgemäß erhaltenen Bauteils und zu verbesserten Migrations- und Korrosionseigenschaften. Aufgrund des Warmpressvorganges ist auch eine endkonturnähere Fertigung möglich, die ausgehend von der Oberfläche eine volumenintensive Zerspannung des Werkstoffes und damit eine Offenlegung von Porositäten einerseits und eine hohe Menge an Legierungsabfall andererseits vermeidet.

Dementsprechend liegt die vorliegende Erfindung in einem Verfahren zur Herstellung von Bauteilen für medienführende Gas- oder Wasserleitungen, insbesondere ein Fitting oder eine Armatur für Trinkwasserleitungen, die zumindest teilweise aus einer Kupfer-Legierung bestehen, die die folgenden Legierungskomponenten in Gew.-% umfasst:
3,0 Gew.-% < Sn ≤ 8 Gew.-%;
1,3 Gew.-% < Zn ≤ 6 Gew.-%;
0,1 Gew.-% ≤ S ≤ 0,7 Gew.-%;
optional nicht mehr als 0,2 Gew.-% Phosphor; und
optional nicht mehr als 0,1 Gew.-% Antimon; und
optional Eisen, Zirkonium und/oder Bor allein oder in Kombination von zwei oder mehr der genannten Elemente nicht mehr als 0,3 Gew.-%; und
unvermeidbare Verunreinigungen, wobei Blei in einer Menge von nicht mehr als 0,25 Gew.-% und Nickel mit einem Nickelgehalt von maximal 0,4 Gew.-% als unvermeidbare Verunreinigungen enthalten sind, sowie zum Rest Kupfer;
wobei das Verfahren die Stufen des (a) Erschmelzens der Kupfer-Legierung; (b) des Herstellens von Pressrohlingen aus der Kupfer-Legierung; und (c) des Pressens der Pressrohlinge bei einer geeigneten Presstemperatur zu den Bauteilen umfasst, wobei die Presstemperatur in einem Bereich von 750°C bis 900°C liegt und die Pressrohlinge vor Stufe (c) auf die Presstemperatur erwärmt und über einen Zeitraum von 0,1 s bis 60 min bei der Presstemperatur gehalten werden, und wobei die Kupferlegierung-Legierung in dem Bauteil nach dem Pressvorgang in einem oberflächennahen Bereich ein Gefüge mit einer mittleren Korngröße kleiner 100 µm aufweist. Darüber hinaus liegt die vorliegende Erfindung in der Bereitstellung eines Bauteils für medienführende Gas- oder Wasserleitungen, insbesondere Fitting oder Armatur für Trinkwasserleitungen, das nach dem erfindungsgemäßen Verfahren hergestellt ist.

Des Weiteren konnte festgestellt werden, dass ein optionaler Antimongehalt von maximal 0,1 Gew.-% bzgl. der Eigenschaften der Trinkwassermigration unkritisch ist. Die Kupferlegierung kann weiter optional auch Anteile der Elemente Eisen (Fe), Zirconium (Zr) und/oder Bor (B) allein oder in einer Kombination von mindestens zwei der genannten Elemente als Kornfeiner enthalten. Dabei ist es bevorzugt, dass Eisen in einem Gewichtsanteil von bis zu 0,3 Gew.-%, Zirconium in einem Gewichtsanteil von bis zu 0,01 Gew.-% und/oder Bor in einem Gewichtsanteil von bis zu 0,01 Gew.-% in der bleifreien Kupferlegierung enthalten sind. Diese Kornfeiner vermeiden Warmrissigkeit und beeinflussen die mechanischen Eigenschaften, wie z.B. Zugfestigkeit, Materialhärte und dergleichen positiv.

Wie hierin verwendet sind unter dem Begriff "Bauteil für medienführende Gas- oder Trinkwasserleitungen" insbesondere solche Bauteile zu verstehen, die einem Hausinstallationsrohrsystem mit Wasser, insbesondere mit Trinkwasser in Verbindung kommen, wobei Fitting und Armaturen derartiger Hausinstallationsrohrsysteme erfindungsgemäß bevorzugt sind. Bei dem Bauteil für medienführende Gas- oder Trinkwasserleitungen kann es sich um ein Gewindeformteil oder um ein gewindeloses Formteil handeln. Dies beinhaltet insbesondere Verbindungsstücke, Anschlussstücke, Anschlusswinkel, Mehrfachverteiler, T-Stücke, Wand-T-Stücke, Wandwinkel, Systemübergänge, Übergangsstücke und gewinkelte Übergangsstücke, die jeweils optional mindestens ein Gewinde aufweisen können. Als Beispiel für ein derartiges Bauteil für medienführende Gas- oder Trinkwasserleitungen ist insbesondere das aus der EP 2 250 421 A1 bekannte Verbindungsstück zu nennen.

Darüber hinaus ist unter dem Begriff "oberflächennaher Bereich", wie hierin verwendet, der Bereich eines Bauteils zu verstehen, der bis zu mindestens 200 µm, bevorzugt bis zu mindestens 100 µm unterhalb der Oberfläche des Bauteils liegt. Dabei versteht es sich, dass diese Korngrößen nur in Abschnitten des Bauteils vorliegen, die durch den Schritt des Pressens tatsächlich auch eine Umformung erfahren haben.

Bei den in dem erfindungsgemäßen Verfahren eingesetzten Pressrohlingen aus der Kupferlegierung kann es sich insbesondere um aus Stangenmaterial oder Hohlstangenmaterial der Kupferlegierung abgelängte Abschnitte handeln.

Der Schwefelgehalt der Kupfer-Legierung, die in dem erfindungsgemäßen Verfahren eingesetzt wird, beträgt vorzugsweise 0,2 Gew. - % bis 0,65 Gew.-%. Aufgrund des Warmumformprozesses richten sich die Sulfid-Partikel bei einem Schwefelgehalt in diesem bevorzugten Bereich in besonders hohem Umfang in die Umformrichtung aus. Bei einem Schwefelgehalt unter 0,20 Gew.-% kann das Problem auftreten, dass kein ausreichender Spanbruch mehr erzeugt werden kann, weil die Abstände der einzelnen Partikelunter Umständen zu groß werden könnten. Dadurch könnten Grate entstehen, welche in zusätzlichen Arbeitsschritten entfernt werden müssen. Bei einem Schwefelgehalt größer 0,65 Gew.-% können die verringerten Abstände der einzelnen Partikel in Umformrichtung zu zwei Effekten führen: Zum einen kann es vorkommen, dass sich die Versetzungen nicht mehr so ungehindert durch die Matrix bewegen können und es kann beim Warmumformungsprozess zu Materialtrennungen an den Sulfid Partikeln kommen. Zum anderen kann das erfindungsgemäß hergestellte Bauteil eine geringere Festigkeit besitzen, was die Haltbarkeit des Bauteils beeinträchtigen kann. Darüber hinaus kann es bei einem Schwefelgehalt über 0,65 Gew.-% Schwefel zu einer Verschlechterung der mechanischen Kennwerte, wie z.B. der Bruchdehnung, kommen. Weiter verbesserte Eigenschaften wurden mit einer Legierung erzielt, deren Schwefelanteil im Bereich von 0,23 Gew.-% bis 0,45 Gew.-%, insbesondere im Bereich von 0,25 Gew.-% bis 0,35 Gew.-% liegt. Aufgrund der erfindungsgemäß verwendeten Legierungszusammensetzung liegen die Metallsulfide bei einem derartigen Schwefelgehalt in der bleifreien Kupferlegierung als inkohärente, fein verteilte, disperse Phase in Form von fein verteilten Partikeln vor. Dies bietet den Vorteil, dass eine eventuell auftretende Korrosion nur in einem geringem Umfang lokal an diesen Partikeln und nicht entlang zusammenhängender, größerer, einzelner Phasen des Legierungsgefüges stattfindet, wie dies beispielsweise bei Standardmessing der Fall ist. Bedingt durch die geringe Größe der Partikel und die im Vergleich zum Gussbauteil sehr stark geschlossene Gefügestruktur (keine Lunker o.ä.) findet kein signifikanter Korrosionsangriff statt.

Der Zinkgehalt der in dem erfindungsgemäßen Verfahren eingesetzten Kupfer-Legierung beträgt vorzugsweise 1,3 Gew.-% bis 3,5 Gew.-%, besonders bevorzugt ist ein Zinkgehalt im Bereich von 2,0 Gew.-% bis 3,0 Gew.-%. Mit einem Zinkgehalt in diesem Bereich kann eine homogene Verteilung der Partikel im Legierungsgefüge gewährleistet werden. Darüber hinaus bewirkt der Zink in diesem Bereich eine verbesserte Fließfähigkeit des Werkstoffes während des Verformungsprozesses. Der Zink-Gehalt von max. 3,5 Gew.-% sichert zusätzlich, dass partielle Korrosionserscheinungen vermieden und eine besonders hohe Korrosionsbeständigkeit erreicht werden kann. Weiter verbesserte Ergebnisse lassen sich bei einem Zink-Gehalt von 1,5 Gew.-% bis 3,3 Gew.-%, besonders bevorzugt von 2,0 Gew.-% bis 3,0 Gew.-% erzielen.

Der Anteil an Phosphor (P) in der bleifreien Kupferlegierung beträgt vorzugsweise mindestens 0,001 Gew.-%, insbesondere 0,015 Gew.-% bis 0,1 Gew.-%. Unterhalb von 0,015 Gew.-% Phosphor ist es möglich, dass keine ausreichende Desoxidation der Schmelze erfolgt, was sich auf die Phasenbildung der Legierung negativ auswirken könnte. Hingegen neigt die Kupferlegierung bei einem Phosphoranteil von mehr als 0,1 Gew.-% zu ungünstigen Auswirkungen auf die mechanischen Eigenschaften, wie z.B. reduzierter Bruchdehnung. Unter diesen Gesichtspunkten liegt der Gewichtsanteil an Phosphor in der bleifreien Kupferlegierung vorzugsweise im Bereich von 0,02 Gew.-% bis 0,08 Gew.-%, besonders bevorzugt im Bereich von 0,04 Gew.-% bis 0,06 Gew.-%.

Der Zinngehalt der in dem erfindungsgemäßen Verfahren eingesetzten Kupfer-Legierung liegt bevorzugt in einem Bereich von 3,0 Gew.-% bis 4,8 Gew.-%, insbesondere in einem Bereich von 3,0 Gew.-% ≤ Sn ≤ 4,5 Gew.-%. In diesem Bereich wird ein ausgewogenes, wirtschaftliches Verhältnis zwischen Festigkeit, Korrosionsbeständigkeit und Phasenverteilung erzielt. Bei einem Zinngehalt im Bereich von 3,0 Gew.-% bis 4,8 Gew.-% werden besonders gute Ergebnisse hinsichtlich Bruchdehnung und Korrosionsbeständigkeit erzielt. Darüber hinaus kann bei einem Zinngehalt im Bereich von 3,0 Gew.-% bis 4,8 Gew.-% die Durchführung des erfindungsgemäßen Verfahrens besonders wirtschaftlich hinsichtlich Umformgeschwindigkeit und Umformkraft durchgeführt werden. Bei der Durchführung des erfindungsgemäßen Verfahrens kann es zu einer dynamischen Reckalterung kommen. Diese kann insbesondere Dann auftreten, wenn die die Diffusionsgeschwindigkeit der Zinnatome beim Umformprozess gleich der Geschwindigkeit der Wanderung der Gitterfehler ist. Das Auftreten der dynamischen Reckalterung kann bei der Durchführung des erfindungsgemäßen Verfahrens durch geeignete Umformgeschwindigkeit und Umformkräfte vermieden werden. Dabei lassen sich bei einem Zinn-Gehalt von 3,5 Gew.-% bis 4,0 Gew.-% besonders gute Ergebnisse. Insofern stellt dieser bevorzugte Bereich einen idealen Kompromiss zwischen Korrosionsbeständigkeit und Herstellbarkeit dar.

Vorzugsweise beträgt der Kupfergehalt der bleifreien Kupferlegierung mindestens 90 Gew.-%, besonders bevorzugt mehr als 92 Gew.-%. Es hat sich gezeigt, dass ein solcher Kupfergehalt eine gute Verarbeitbarkeit in Kombination mit einer guten Korrosionsbeständigkeit erlaubt.

Bevorzugt handelt es sich bei der in dem erfindungsgemäßen Verfahren eingesetzte Kupferlegierung um eine bleifreie Kupferlegierung. Wie hierin verwendet, bedeutet der Begriff "bleifreie Kupferlegierung" eine Kupferlegierung, die insbesondere Blei als unvermeidbare Verunreinigung in einer Menge von nicht mehr als 0,25 Gew.-%, bevorzugt aber nicht mehr als 0,10 Gew.-%, besonders bevorzugt nicht mehr als 0,05 Gew.-% umfasst. In der Legierung liegt der Bleianteil bei maximal 0,25 Gew.-%, vorzugsweise bei maximal 0,10 Gew.-% und besonders bevorzugt bei maximal kleiner gleich 0,05 Gew.-%. Bei einer Prüfung der Bleimigration nach Norm DIN EN 15664-1 zeigt die Legierung keine Anzeichen einer erhöhten Bleiabgabe in den ersten Wochen. Stattdessen lässt sich ab der achten Prüfwoche keine nennenswerte Bleimigration mehr ins Trinkwasser ermitteln oder liegt im Bereich der Messgenauigkeit des Verfahrens. Der Nickelanteil als unvermeidbare Verunreinigung in der erfindungsgemäß verwendeten Legierung beträgt maximal 0,4 Gew.-%, bevorzugt maximal 0,3 Gew.-%. Der Nickelzusatz erhöht die Korrosionsbeständigkeit der Legierung, ohne im Widerspruch zur hygienischen Unbedenklichkeit zu stehen. Ähnlich wie beim Blei, befinden sich die Werte der Nickelmigration bei einer Prüfung nach Norm DIN EN 15664-1 weit unter den gesetzlich geforderten Grenzwert.

Erfindungsgemäß liegt die Presstemperatur in Stufe (c) in einem Bereich von 750°C bis 900°C, vorzugsweise in einem Bereich von 800°C bis 880°C. Unterhalb einer Presstemperatur von 750°C kann nicht sicher gewährleitestet werden, dass es zu einer Feinkornbildung kommt. Weiterhin sind in diesem Bereich deutlich höhere Umformkräfte notwendig, um ein Bauteil zu fertigen. Dies kann zum einen in Qualitätsproblemen durch nicht ordnungsgemäß ausgeformte Bereiche führen und zum anderen ist die Umformung dann nicht mehr wirtschaftlich. Oberhalb einer Presstemperatur von 900°C entstehen erste Flüssigphasen entlang der Korngrenzen der Kupferlegierung, was zu Warmrissen und ungünstigen Korngrenzbelegungen im Werkstoff führt. In dem bevorzugten Bereich der Presstemperatur von 800°C bis 880°C entsteht ein besonders homogenes, feinkörniges Gefüge und das Risiko von Warmrissen wird minimiert. Bei Presstemperaturen in einem Bereich von 815°C bis 850°C lässt sich die dynamische Reckalterung der Legierung besonders gut vermeiden.

Erfindungsgemäß werden die Pressrohlinge vor Stufe (c) auf die Presstemperatur erwärmt und über einen Zeitraum von 0,1 s bis zu 60 min, vorzugsweise von 2 s bis 10 min, bei der Presstemperatur gehalten. Werden die Pressrohlinge vor dem Verpressen über den genannten Zeitraum bei der Presstemperatur gehalten, dann ist sichergestellt das der ganze Pressrohling eine homogene Temperatur erreicht hat und somit ein gleichmäßiger Pressvorgang stattfinden kann.

Es kann sich auch als günstig erweisen, wenn die Kupferlegierung in dem Bauteil nach dem Warmpressvorgang in einem oberflächennahen Bereich ein Gefüge mit einer mittleren Korngröße kleiner 100 µm aufweist. Dadurch werden das Migrationsverhalten und die Korrosionsbeständigkeit der erfindungsgemäß hergestellten Bauteile weiter verbessert. Bevorzugt weist die Kupferlegierung in dem Bauteil nach dem Warmpressvorgang im oberflächennahen Bereich ein Gefüge mit einer mittleren Korngröße von 10 µm bis 70 µm, insbesondere von 20 µm bis 60 µm auf.

In Bezug auf das erfindungsgemäße Bauteil hat es sich als günstig erwiesen, wenn das erfindungsgemäße Bauteil zumindest abschnittsweise eine Wandstärke im Bereich von 0,5 mm bis 6,0 mm aufweist, da die dünne Wandstärke zu für die Ausbildung der für das Migrationsverhalten günstigen Kupfersulfide geeigneten Abkühlungsraten führt. Weiterhin ist es bevorzugt, wenn das gesamte erfindungsgemäße Bauteil eine Wandstärke innerhalb der genannten Bereiche von 0,5 mm bis 4,0 mm besitzt, da es bei einer Wandstärke in diesem Bereich zu einer besonders erhöhten Ausbildung der gewünschten Sulfidpartikel kommt. Eine Wandstärke unterhalb von 0,5 mm könnte aufgrund des geringen Querschnitts keine ausreichende mechanische Festigkeit des erfindungsgemäßen Bauteils aufweisen. Unter diesen Gesichtspunkten ist es bevorzugt, dass das erfindungsgemäße Bauteil zumindest abschnittsweise eine Wandstärke im Bereich von 1,0 mm bis 4,0 mm aufweist.

Darüber hinaus weist die Kupferlegierung in dem erfindungsgemäßen Bauteil in einen oberflächennahen Bereich ein Gefüge mit einer mittleren Korngröße kleiner 100 µm auf. Dies trägt zu einem sehr guten Migrationsverhalten und zu einer hohen Korrosionsbeständigkeit der erfindungsgemäßen Bauteile bei. Gleichzeitig kann damit ein druckdichtes Gefüge gewährleistet werden. Das druckdichte Gefüge resultiert u.a. aus einem verschließen möglicher Hohlräume und Schwindungen aufgrund der beim Gesenkschmieden eingebrachten hohen Drücke und Temperaturen. Der Werkstoff wird gleichzeitig homogenisiert und mögliche Unterschiede in den Korngrößen ausgeglichen, was die mechanischen Eigenschaften ebenfalls verbessert. Bevorzugt weist die Kupferlegierung in dem Bauteil nach dem Warmpressvorgang im oberflächennahen Bereich ein Gefüge mit einer mittleren Korngröße von 10 µm bis 70 µm, insbesondere von 20 µm bis 60 µm auf.

Das erfindungsgemäß hergestellte weist ein druckdichtes Gefüge mit Verbesserungen im Bereich der Korrosionsbeständigkeit auf. Im Unterschied zum Gussstück, bei dem ein Flächenabtrag auch im Grund eines Lunkers beginnen kann und sich möglicherweise durch Aufkonzentrationen verstärkt, ist bei der vorliegenden Produktionsmethode mit einem Schritt der Warmumformung der Flächenangriff nur ausgehend von der Oberfläche erkennbar. Dies ermöglicht auch die Konstruktion noch wesentlich filigranerer Bauteile, mit erhöhten mechanischen Anforderungen. Auch werden beim Warmpressen mögliche Seigerungen homogenisiert, es können somit keine Konzentrationsunterschiede und mögliche Verarmungen an Zinn entstehen. Dies kann einem möglichen Korrosionsangriff vorbeugen. Nachstehend soll die vorliegende Erfindung unter Bezugnahme auf Ausführungsbeispiele und damit durchgeführte Tests sowie beigefügte Zeichnungen näher erläutert werden. Es versteht sich, dass diese Beispiele nicht als die Erfindung in irgendeiner Weise einschränkend zu betrachten sind. Sofern nichts anderes angegeben ist, sind in der vorliegenden Anmeldung einschließlich der Ansprüche sämtliche Prozentangaben und Anteilsangaben auf das Gewicht bezogen.

### Kurze Beschreibung der Zeichnungen

- Fig. 1: ein Gefügeschliffbild eines umgeformten Prüfkörpers aus Legierung 1;
- Fig. 2: ein Gefügeschliffbild eines weiteren umgeformten Prüfkörpers aus Legierung 1;
- Fig. 3: eine fotographische Darstellung einer als Wandwinkel ausgebildeten Ausführungsform eines erfindungsgemäßen Bauteils, hergestellt aus Legierung 2;
- Fig. 4: eine fotographische Übersichtsdarstellung des Gefügeschliffs des in Fig. 3 gezeigten erfindungsgemäßen Bauteils, hergestellt aus Legierung 2;
- Fig. 5: einen vergrößerten Ausschnitt aus der in Fig. 4 gezeigten Übersichtsdarstellung des erfindungsgemäßen Bauteils, hergestellt aus Legierung 2;
- Fig. 6: einen weiteren vergrößerten Ausschnitt aus der in Fig. 4 gezeigten Übersichtsdarstellung des erfindungsgemäßen Bauteils, hergestellt aus Legierung 2;
- Fig. 7: einen weiteren vergrößerten Ausschnitt aus der in Fig. 4 gezeigten Übersichtsdarstellung des erfindungsgemäßen Bauteils, hergestellt aus Legierung 2;
- Fig. 8: einen weiteren vergrößerten Ausschnitt aus der in Fig. 4 gezeigten Übersichtsdarstellung des erfindungsgemäßen Bauteils, hergestellt aus Legierung 2;
- Fig. 9: eine fotografische Aufnahme eines gegossenen und damit nicht erfindungsgemäßen Bauteils aus der Legierung 22 gemäß Tabelle 5 das ein Beispiel für einen möglichen Lunker und den damit tieferliegenden Angriffspunkt im Warmauslagerungstest (angelehnt an Turner mit einem Chloridgehalt von 250 mg/l und einer Karbonathärte von 5,5 °dH) zeigt;
- Fig. 10: eine fotografische Aufnahme eines erfindungsgemäß hergestellten Bauteils aus der Legierung 22 gemäß Tabelle 5, die ein Beispiel für eine homogene Oberfläche mit einem Schutzschichtaufbau im Warmauslagerungstest (angelehnt an Turner mit einem Chloridgehalt von 250 mg/l und einer Karbonathärte von 5,5 °dH) zeigt.

### Laborversuch zum Umformverhalten

Um das Umformverhalten nachzustellen, wurden Gesenkschmiedeversuche im Labormaßstab durchgeführt. Als Ausgangsmaterial diente ein Rohr mit der Abmessung 23 mm x 8 mm. Das Halbzeug wurde im Stranggussverfahren aus einer Kupferlegierung hergestellt, wobei die Anteile der Komponenten in der Kupferlegierung in nachstehender Tabelle 1 in Gew.-% angegeben sind.

**Tabelle 1: Legierungszusammensetzung**

| Legierung | Cu | Zn | Pb | Sn | P | S | Fe | Ni | Si | Sb | Al |
|---|---|---|---|---|---|---|---|---|---|---|---|
| 1 | 94,2 | 1,4 | 0,02 | 3,87 | 0,04 | 0,42 | 0,01 | 0,01 | 0,01 | 0,01 | 0,01 |

Die halbmondförmigen Prüfkörper wurden hergestellt, indem aus dem Rohr Scheiben mit einer Dicke von etwa 5 mm herausgeschnitten wurden und die Scheiben in der Mitte getrennt wurden. Die so erhaltenen Prüfkörper wurden mit der runden Seite nach oben in das Gesenk verbracht. Bei dem Gesenk handelt es sich um ein würfelförmiges Werkzeug aus massiven Stahl. Dieses besitzt an der Oberseite eine kreuzförmige Aussparung, in diese Aussparung wurde der zu prüfende Prüfkörper eingelegt.

Der in dem Gesenk aufgenommene Prüfkörper wurde für die in Tabelle 2 angegebene Aufheizzeit in einen Ofen gestellt und darin auf die ebenfalls in Tabelle 2 angegebene Umformtemperatur aufgeheizt. Zur Umformung wurde der in dem Gesenk aufgenommene Prüfkörper aus dem Ofen entnommen, auf einem Amboss platziert und durch Schlagen mit einem Vorschlaghammer mit einer Masse von 5 kg umgeformt. Die Anzahl der Hammerschläge ist in Tabelle 2 angegeben. Aufgrund der halbmondförmigen Geometrie und der Aussparung des Rohrinnendurchmessers, fand in jedem Fall eine Umformung statt. Im Anschluss an die Umformung wurde die Probe mittels Wasser abgekühlt, um den so entstandenen Gefügezustand zu konservieren und zu beurteilen. Die umgeformten Proben wurden dann metallographisch präpariert und im Bereich der Umformung beurteilt. Die Korngrößen wurden nach DIN EN ISO 2624 im Linienschnittverfahren bestimmt.

Die Versuchsbedingungen sind in nachstehender Tabelle 2 zusammengefasst:

**Tabelle 2: Versuchsbedingungen**

| Probennummer | Umformtemperatur[°C] | Aufheizzeit [min] | Anzahl der Schläge (Verformung) |
|---|---|---|---|
| 1 | 800 | 90 | 2 |
| 2 | 800 | 30 | 1 |
| 3 | 830 | 75 | 1 |
| 4 | 830 | 75 | 1 |
| 5 | 860 | 65 | 1 |
| 6 | 860 | 65 | - |
| 7 | 800 | 60 | - |
| 8 | 800 | 60 | - |
| 9 | 830 | 60 | - |
| 10 | 830 | 60 | - |
| 11 | 860 | 60 | - |
| 12 | 860 | 60 | - |
| 13 | 600 | 60 | - |
| 14 | 600 | 60 | - |
| 15 | 600 | 60 | 1 |
| 16 | 600 | 60 | 1 |
| 17 | 700 | 60 | 1 |
| 18 | 700 | 60 | 1 |
| 19 | 700 | 60 | - |
| 20 | 700 | 60 | - |
| 21 | 950 | 60 | 1 |
| 22 | 950 | 60 | 1 |
| 23 | 950 | 60 | 1 |
| 24 | 950 | 60 | - |

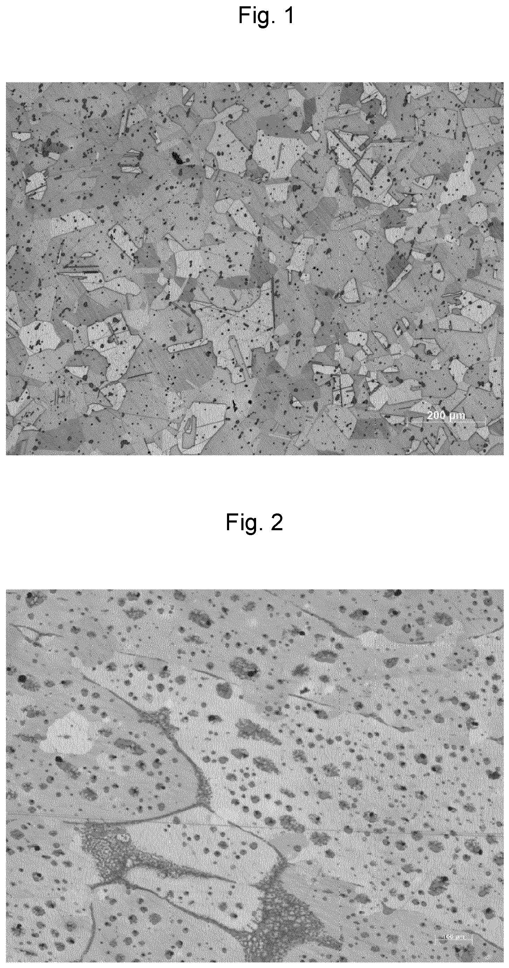

In den Versuchen konnte festgestellt werden, dass sich im Bereich zwischen 800 und 860°C sehr positive Umformeigenschaften zeigen und es zur beschriebenen Feinkornbildung kommt. Liegen die Temperaturen in einem niedrigeren Bereich, so sind kaum mehr Umformungen zu erzielen. Liegen sie in einem höheren Bereich, so sind Aufschmelzungen und netzförmige Sulfidagglomerate sichtbar. In Figur 1 ist ein Gefügeschliffbild eines Prüfkörpers gezeigt, der im Laborversuch bei 830°C umgeformt worden (Probe 3). Das umgeformte Gefüge weist eine reduzierte mittlere Korngröße von ca. 45 µm auf. Die Korngröße des Prüfkörpers vor der Umformung entspricht dem eines gegossenen Bauteiles, ca. 540 µm.

In Figur 2 (Probe 21) ist ein Gefügeschliffbild eines weiteren umgeformten Prüfkörpers gezeigt, der durch einen Hammerschlag bei etwa 950°C umgeformt worden ist. Wie Figur 2 zeigt, besitzt das Gefüge des Prüfkörpers aufgeschmolzene Gefügebereiche, die auf die hohe Umformungstemperatur von etwa 950°C zurückzuführen sind. Die mittlere Korngröße beträgt hier etwa 140 µm. Das vorliegende Bauteil zeigt Warmrisse und im Gefüge ungünstig verteilte Sulfidpartikel. Daher handelt es sich um einen Zustand der im realen Bauteil nicht verwendbar ist.

### Untersuchung eines gepressten Bauteils bzgl. der Korngrößenverteilung

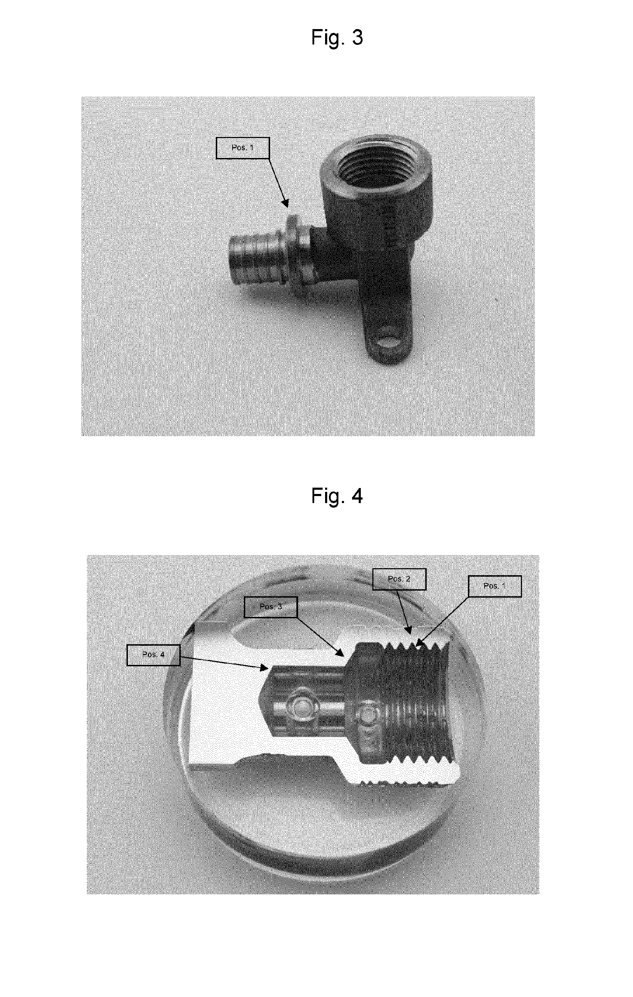

Um die Herstellbarkeit eines gepressten Bauteiles in einem realen Fertigungsprozess nachzustellen, wurde einige typische Bauteile einer Trinkwasserinstallation gefertigt. Unter anderem wurde ein Wandwinkel produziert, der in der fotographischen Darstellung gemäß Figur 3 gezeigt ist.

Die zum Pressen des Wandwinkels eingesetzte Kupferlegierung wies die in nachstehender Tabelle 3 und Tabelle 4 angegebenen Anteile der Komponenten in Gew.-% auf.

**Tabelle 3: Legierungszusammensetzung**

| Legierung | Cu | Zn | Pb | Sn | P | S | Fe | Ni | Si | Sb | Al |
|---|---|---|---|---|---|---|---|---|---|---|---|
| 2 | 94,9 | 1,6 | 0,05 | 3,2 | 0,01 | 0,19 | 0,01 | 0,02 | 0,01 | 0,00 | 0,01 |

**Tabelle 4: Weitere Legierungszusammensetzungen**

| Legierung | Cu | Zn | Pb | Sn | P | S | Fe | Ni | Rest |
|---|---|---|---|---|---|---|---|---|---|
| 3 | 95,1 | 1,5 | 0,01 | 3,1 | 0,004 | 0,26 | 0,01 | 0,01 | 0,03 |
| 4 | 95,1 | 1,6 | 0,01 | 3,0 | 0,04 | 0,25 | 0,02 | 0,01 | 0,04 |
| 5 | 95,2 | 1,6 | 0,01 | 2,9 | 0,03 | 0,24 | 0,02 | 0,01 | 0,03 |
| 6 | 95,1 | 1,6 | 0,01 | 3,0 | 0,02 | 0,25 | 0,01 | 0,01 | 0,04 |
| 7 | 93,6 | 1,6 | 0,02 | 4,5 | 0,01 | 0,24 | 0,02 | 0,01 | 0,04 |
| 8 | 93,8 | 1,6 | 0,01 | 4,0 | 0,03 | 0,43 | 0,01 | 0,01 | 0,04 |
| 9 | 95,4 | 1,3 | 0,01 | 3,0 | 0,01 | 0,16 | 0,01 | 0,01 | 0,03 |
| 10 | 95,5 | 1,3 | 0,01 | 3,0 | 0,01 | 0,14 | 0,01 | 0,01 | 0,03 |
| 11 | 94,5 | 1,3 | 0,01 | 3,9 | 0,02 | 0,15 | 0,01 | 0,00 | 0,03 |
| 12 | 94,7 | 1,2 | 0,01 | 3,9 | 0,01 | 0,15 | 0,01 | 0,00 | 0,03 |
| 13 | 94,3 | 1,5 | 0,01 | 3,9 | 0,03 | 0,15 | 0,01 | 0,00 | 0,04 |
| 14 | 93,9 | 1,5 | 0,02 | 4,1 | 0,04 | 0,46 | 0,01 | 0,00 | 0,03 |
| 15 | 93,9 | 1,5 | 0,02 | 4,0 | 0,02 | 0,46 | 0,01 | 0,00 | 0,03 |
| 16 | 94,0 | 1,5 | 0,02 | 4,0 | 0,02 | 0,46 | 0,01 | 0,00 | 0,02 |
| 17 | 92,4 | 3,1 | 0,02 | 4,0 | 0,04 | 0,43 | 0,02 | 0,00 | 0,03 |
| 18 | 92,4 | 3,0 | 0,02 | 4,0 | 0,04 | 0,43 | 0,02 | 0,00 | 0,03 |
| 19 | 94,9 | 1,6 | 0,01 | 3,0 | 0,05 | 0,44 | 0,01 | 0,00 | 0,02 |
| 20 | 95,3 | 1,3 | 0,01 | 2,9 | 0,02 | 0,46 | 0,01 | 0,00 | 0,03 |
| 21 | 95,4 | 1,2 | 0,01 | 2,9 | 0,01 | 0,45 | 0,01 | 0,00 | 0,02 |

Für die Produktion des Wandwinkels, wurden aus oben genannten Material Stranggussstangen hergestellt, die zu Pressrohlingen abgelängt wurden. Die Pressrohlinge wurden anschließend in einem Vorheizofen auf eine Presstemperatur von ca. 830°C erhitzt. Aus dem Vorheizofen wurden die erhitzten Rohlinge dann per Rutsche in ein vorgeheiztes Gesenk verbracht, in dem die Bauteile durch Schließen des Gesenks hergestellt worden sind. Die so gewonnenen Pressteile wurden anschließend abgekühlt. In einem letzten Schritt wurden die Bauteile endverarbeitet und mit einer Durchgangsbohrung sowie mit einem Gewinde versehen.

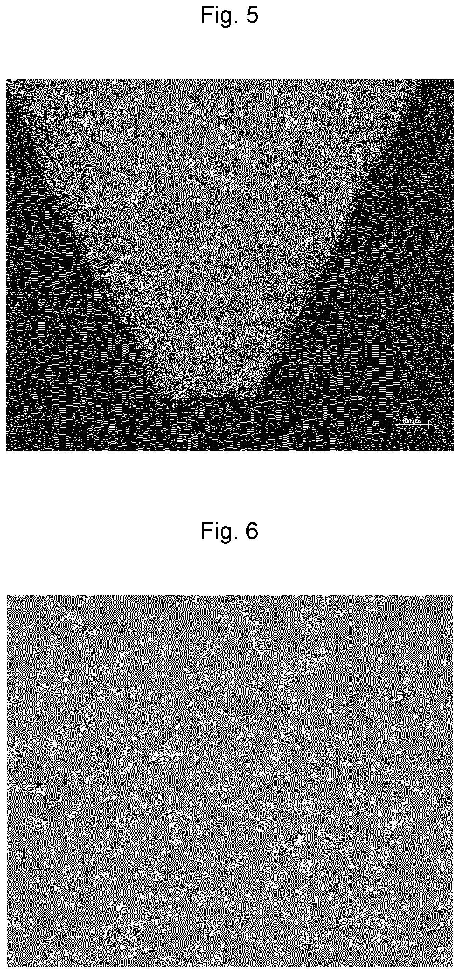

In Figur 4 ist ein Übersichtsbild des Gefügeschliffes eines Schnittes durch den in Figur 3 gezeigten gepressten Wandwinkel, hergestellt aus Legierung 2, dargestellt. Die verschiedenen Positionen zeigen dabei kritische Bereiche des Formstückes. In Figur 5 (Position 1) ist dabei der Gewindebereich mit einem besonders feinkörnigen Gefüge zu sehen. Der untere Teil des Bildes zeigt dabei die mit Medium in Kontakt kommende Innenseite, die bei der bestimmungsgemäßen Verwendung des erfindungsgemäßen Bauteils mit dem Medium, insbesondere mit Wasser, in Kontakt kommt. Hier kommt die erhöhte Festigkeit des druckdichten Gefüges im Gewindebereich zum Tragen. Dadurch kommt es im hochbelasteten Gewindebereich zu weniger Verformungen und das Bauteil wird besser abgedichtet. In Figur 6 (Position 2) ist der Innenbereich hinter dem Gewindezahn aus Figur 4 zu erkennen.

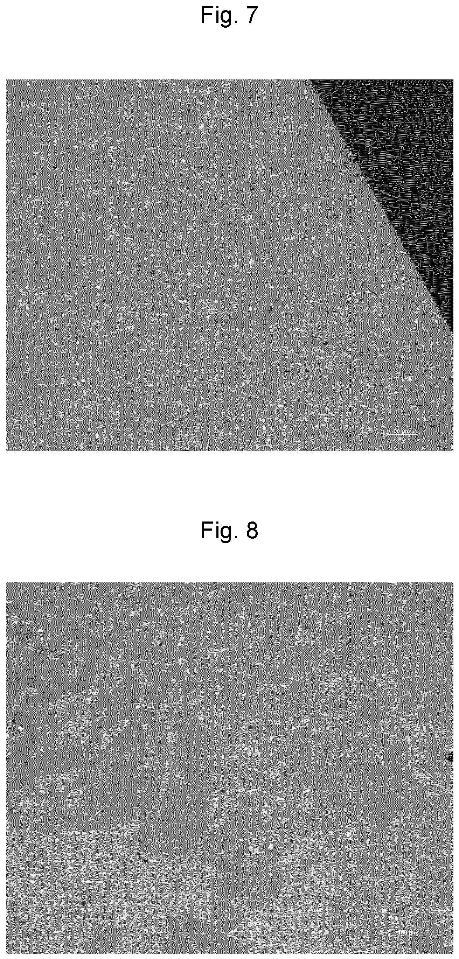

Die Korngröße nimmt an dieser Stelle zu, sodass eine höhere Zähigkeit gegeben ist. In Figur 7 (Position 3) wird diese Art der Gefügeausbildung auch in einem weiteren Bereich gezeigt. Dieser befindet sich im Gewindegrund am Übergang zur Verjüngung des Bauteiles. Hier beträgt die mittlere Korngröße ca. 25 µm. Besonderes um einem erosiven Verschleiß vorzubeugen, ist die aufgrund der niedrigen mittleren Korngröße erhöhte Oberflächenhärte in diesem Bereich von Vorteil. Figur 8 (Position 4) illustriert den Bereich, in dem das erfindungsgemäße Bauteil für den Übergang zum Auslauf aufgebohrt worden ist. Im Wesentlichen liegt hier weiterhin der ursprüngliche Zustand der Legierung in dem Pressrohling, also vor dem Pressvorgang, vor, welcher ggf. auftretende mechanische Kräfte in Form von Versetzungen aufnehmen kann. Diese können bei einer Baustellenmontage vor allem beim Ausrichten des Wandwinkels für eine Armatur einen besonders belasteten Bereich darstellen, wobei der zähe Kern hier von großem Vorteil ist.

Dies zeigt, dass sich die Materialhärte in den verformten Bereichen grundsätzlich deutlich steigern lässt. Im vorliegenden Beispiel konnte im Kragenbereich (siehe Position 1 - Figur 3) die Härte im Vergleich zu einem baugleichen Wandwinkel aus einem Sandgussverfahren auf eine Härte von 78 HBW 2,5/62,5 nach DIN EN ISO 6506-1 signifikant gesteigert werden.

Für die weiteren bleifreien Kupferlegierungen aus Tabelle 4 werden erfindungsgemäß gepresste Bauteil mit ebenfalls verbesserten Eigenschaften erhalten, wie z.B. die Materialhärte in den verformten Bereichen.

### Bestimmung des Korrosionsverhaltens einer Kupferlegierung in Kontakt mit einem wässrigen Medium von im Gesenkschmiedenverfahren produzierten Bauteile

Zur Beurteilung der Korrosionsbeständigkeit wurden im Gesenkschmieden hergestellte Bauteile einem Warmauslagerungstest, der in der Offenlegungsschrift DE 10 2017 100896 A1 beschrieben ist, unterzogen.

Für diese Warmauslagerungstests wurde unter anderem eine bleifreie Kupferlegierung eingesetzt, deren Anteile der einzelnen Legierungskomponenten in nachstehender Tabelle 5 in Gew.-% angegeben ist.

**Tabelle 5: Legierungszusammensetzung**

| Legierung | Cu | Zn | Pb | Sn | P | S | Fe | Ni | Si | Sb | Al |
|---|---|---|---|---|---|---|---|---|---|---|---|
| 22 | 94,78 | 1,66 | 0,00 | 3,27 | 0,01 | 0,20 | 0,01 | 0,02 | 0,00 | 0,01 | 0,00 |

Zur Herstellung von Prüfkörpern wurden, aus der Legierung Wandwinkel 16 Rp ½ für den Baustelleneinsatz gefertigt. Die mechanische Bearbeitung der Bauteile erfolgte unter seriennahen Bedingungen. Dazu wurden beispielsweise die Oberflächen mit vergleichbaren Rauigkeitstiefen gefertigt. Zur Gewinnung der Prüfkörper wurden im Anschluss die Bauteile halbiert. Die Oberfläche der Prüfkörper wurde mit Aceton gereinigt. Um für die Messung ein Nullniveau zu generieren wurden die Bauteile dann Unterseite lackiert und im unlackierten Prüfbereich ein weiteres Mal gereinigt. Anschließend wurden die Prüfkörper frei hängend in ein Prüfbehältnis eingebracht. Die Prüfbehältnisse wurden dann für fünf Monate in einen Wärmeschrank bei 90°C eingestellt, wobei das Prüfmedium jeweils in Intervallen von sieben Tagen gewechselt wurde.

Als Prüfmedien wurden jeweils 21 verschiedene wässrige Prüfmedien bzw. Prüfwässer mit unterschiedlichen pH-Werten und Säurekapazitäten eingestellt. Darüber hinaus wurden verschiedene Gehalte an Chloridionen und/oder Sulfationen durch die Zugabe von Natriumchlorid und/oder Natriumsulfat eingestellt. Die Gehalte können aus Tabelle 6 entnommen werden.

**Tabelle 6:**

| Wassernummer | pH-Wert | Karbonathärte in °dH | Chlorid in mg/l | Sulfat in mg/l |
|---|---|---|---|---|
| 1 | 9 | 0,5 | 10 | - |
| 2 | 9 | 0,5 | 100 | - |
| 3 | 9 | 0,5 | 250 | - |
| 4 | 9 | 0,5 | 1000 | - |
| 5 | 8 | 1,5 | 15 | - |
| 6 | 8 | 1,5 | 60 | - |
| 7 | 8 | 1,5 | 140 | - |
| 8 | 8 | 3,0 | 30 | - |
| 9 | 8 | 3,0 | 100 | - |
| 10 | 8 | 5,5 | 80 | - |
| 11 | 8 | 5,5 | 120 | - |
| 12 | 8 | 5,5 | 250 | - |
| 13 | 7 | 9,0 | 100 | - |
| 14 | 7 | 9,0 | 160 | - |
| 15 | 7 | 14,0 | 140 | - |
| 16 | 7 | 18,0 | 40 | - |
| 17 | 7 | 18,0 | 100 | - |
| 18 | 7 | 18,0 | 250 | - |
| 19 | 9 | 0,5 | 250 | 250 |
| 20 | 8 | 5,5 | 250 | 250 |
| 21 | 7 | 18,0 | 250 | 250 |

Nach Abschluss des fünfmonatigen Testzeitraums werden die Prüfbehältnisse aus dem Wärmeschrank entnommen, auf Raumtemperatur abgekühlt, die Prüfkörper aus den jeweiligen Prüfbehältnissen entnommen, getrocknet, aufgeschnitten und die Schnittfläche nach entsprechender Aufarbeitung lichtmikroskopisch untersucht.

Im Vergleich zu einem aus Legierung 22 gegossen Bauteil zeigt ein aus Legierung 22 warmgepresstes Bauteil eine nochmals verbesserte Angriffsbeständigkeit. Dies liegt vor allem im dichteren Gefüge begründet. Dadurch, dass keine Lunker oder Porositäten vorliegen, greift das Medium beim warmgepressten Bauteil flächig von der Oberfläche an und es bildet sich sehr zügig eine schützende, festhaftende, geschlossene Deckschicht. Diese Schicht ist wie beim Gussbauteil nahezu frei von Störungen bzw. Defekten und entfaltet damit ihren vollständigen Schutz durch die Vermeidung eines Angriffes im Grund einer Porosität.

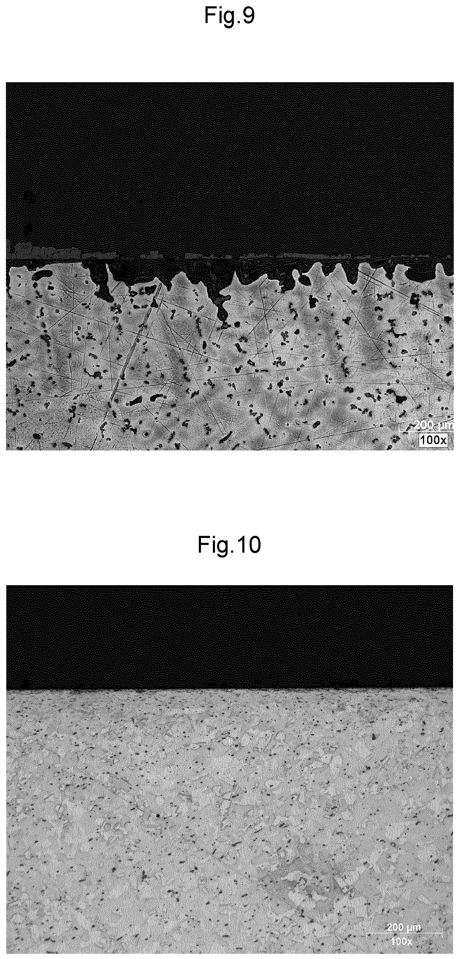

In Fig. 9 ist ein aus Legierung 22 herkömmlich gegossen Bauteil mit Angriffen dargestellt, die sich entlang von Poren in die Tiefe fortsetzen, welches im Warmauslagerungstest bei einer Karbonathärte von 5,5 °dH und einem Chloridgehalt von 250 mg/l eingesetzt wurde. Im Vergleich dazu ist in Fig. 10 ein erfindungsgemäß warmgepresstes Bauteil aus Legierung 22 dargestellt, welches bei identischer Werkstoffzusammensetzung unter gleichen Prüfungsbedingungen beim Warmauslagerungstest geprüft wurde. Beim warmgepressten Bauteil finden sich im Gegensatz zum Bauteil aus Fig. 9 keinerlei Poren. Das Medium greift daher homogen an der Oberfläche an und die Angriffe sind dadurch deutlich geringer. Das Korrosionsverhalten wird durch das Warmpressen, wie in Fig. 10 gezeigt, positiv beeinflusst.

Voranstehend wurde die vorliegende Erfindung unter Bezugnahme auf Beispiele und Vergleichsbeispiele beschrieben. Für den Fachmann ist es jedoch ersichtlich, dass die Erfindung nicht auf diese Beispiele eingeschränkt ist, sondern sich der Umfang der vorliegenden Erfindung aus den beiliegenden Ansprüchen ergibt.

## Patentansprüche

1. Verfahren zur Herstellung von Bauteilen für medienführende Gas- oder Wasserleitungen, insbesondere Fittings oder Armaturen für Trinkwasserleitungen, die zumindest teilweise aus einer Kupfer-Legierung bestehen, die die folgenden Legierungskomponenten in Gew.-% umfasst:
3,0 Gew.-% ≤ Sn ≤ 8 Gew.-%;
1,3 Gew.-% ≤ Zn ≤ 6 Gew.-%;
0,1 Gew.-% ≤ S ≤ 0,7 Gew.-%;
optional nicht mehr als 0,2 Gew.-% Phosphor;
optional nicht mehr als 0,1 Gew.-% Antimon; und
optional Eisen, Zirkonium und/oder Bor allein oder in Kombination von zwei oder mehr der genannten Elemente nicht mehr als 0,3 Gew.-%; und
unvermeidbare Verunreinigungen, wobei Blei in einer Menge von nicht mehr als 0,25 Gew.-% und Nickel mit einem Nickelgehalt von maximal 0,4 Gew.-% als unvermeidbare Verunreinigungen enthalten sind, sowie zum Rest Kupfer;
wobei das Verfahren die folgenden Stufen umfasst:
(a) Erschmelzen der Kupfer-Legierung;
(b) Herstellen von Pressrohlingen aus der Kupfer-Legierung; und
(c) Pressen der Pressrohlinge bei einer geeigneten Presstemperatur zu den Bauteilen,
wobei die Presstemperatur in einem Bereich von 750°C bis 900°C liegt und die Pressrohlinge vor Stufe (c) auf die Presstemperatur erwärmt und über einen Zeitraum von 0,1 s bis 60 min bei der Presstemperatur gehalten werden, und wobei die Kupferlegierung-Legierung in dem Bauteil nach dem Pressvorgang in einem oberflächennahen Bereich ein Gefüge mit einer mittleren Korngröße kleiner 100 µm aufweist.

2. Verfahren nach Anspruch 1, **dadurch gekennzeichnet, dass** der Schwefel-Anteil in der Legierung 0,20 Gew.-% ≤ S ≤ 0,65 Gew.-%, insbesondere 0,23 Gew.-% ≤ S ≤ 0,45 Gew.-%, und bevorzugt 0,25 Gew.-% ≤ S ≤ 0,35 Gew.-%, beträgt.

3. Verfahren nach Anspruch 1 oder Anspruch 2, **dadurch gekennzeichnet, dass** der Zink-Anteil in der Legierung 1,3 Gew.-% ≤ Zn ≤ 3,5 Gew.-%, vorzugsweise 1,5 Gew.-% ≤ Zn ≤ 3,3 Gew.-%, besonders bevorzugt 2,0 Gew.-% ≤ Zn ≤ 3,0 Gew.-% beträgt.

4. Verfahren nach einem der vorherigen Ansprüche, **dadurch gekennzeichnet, dass** der Phosphor-Anteil in der Legierung 0,015 Gew.-% ≤ P ≤ 0,1 Gew.-%, insbesondere 0,02 Gew.-% ≤ P ≤ 0,08 Gew.-%, und bevorzugt 0,04 Gew.-% ≤ P ≤ 0,06 Gew.-% beträgt.

5. Verfahren nach einem der vorherigen Ansprüche, **dadurch gekennzeichnet, dass** der Gehalt an Zinn-Anteil in der Legierung 3,0 Gew.-% ≤ Sn ≤ 4,8 Gew.-% beträgt, vorzugsweise 3,0 Gew.-% bis 4,5 Gew.-%., besonders bevorzugt 3,5 Gew.-% bis 4,0 Gew.-%.

6. Verfahren nach einem der vorherigen Ansprüche, **dadurch gekennzeichnet, dass** Kupfer in der bleifreien Kupferlegierung in einer Menge von mehr als 90 Gew.-% enthalten ist.

7. Verfahren nach einem der vorherigen Ansprüche, **dadurch gekennzeichnet, dass** die Presstemperatur in Stufe (c) in einem Bereich von 800°C bis 880°C und besonders bevorzugt in einem Bereich von 815°C bis 850°C, liegt.

8. Verfahren nach einem der vorherigen Ansprüche, **dadurch gekennzeichnet, dass** die Pressrohlinge vor Stufe (c) auf die Presstemperatur erwärmt und über einen Zeitraum von 2 s bis 10 min bei der Presstemperatur gehalten werden.

9. Bauteil für medienführende Gas- oder Wasserleitungen, insbesondere Fitting oder Armatur für Trinkwasserleitungen, hergestellt nach einem Verfahren nach einem der Ansprüche 1 bis 8.

10. Bauteil für medienführende Gas- oder Wasserleitungen nach Anspruch 9, **dadurch gekennzeichnet, dass** die Kupferlegierung-Legierung in dem Bauteil nach dem Pressvorgang in einem oberflächennahen Bereich ein Gefüge mit einer mittleren Korngröße kleiner 100 µm aufweist.

11. Bauteil nach Anspruch 9 oder Anspruch 10, **dadurch gekennzeichnet, dass** das Bauteil zumindest abschnittsweise eine Wandstärke im Bereich von 0,5 mm bis 6,0 mm, vorzugsweise im Bereich von 1,0 mm bis 4,0 mm aufweist.

## Claims

1. Method for producing components for media-carrying gas or water pipes, in particular fittings or valves for drinking water pipes, which consist at least partly of a copper alloy, comprising the following alloy components in % by weight:
3.0% by weight ≤ Sn ≤ 8% by weight;
1.3% by weight ≤ Zn ≤ 6% by weight;
0.1% by weight ≤ S ≤ 0.7% by weight;
optionally not more than 0.2% by weight of phosphorous;
optionally not more than 0.1% by weight of antimony; and
optionally iron, zirconium and/or boron alone or in combination of two or more of said elements, not more than 0.3% by weight; and
unavoidable impurities, wherein lead in an amount of not more than 0.25% by weight and nickel with a nickel content of not more than 0.4% by weight are included as unavoidable impurities, and the remainder copper;
wherein the method comprises the following steps:
(a) melting the copper alloy;
(b) producing press blanks from the copper alloy; and
(c) pressing the press blanks at a suitable pressing temperature to form the components,
wherein the pressing temperature is in the range of 750°C to 900°C and the press blanks are heated to the pressing temperature before step (c) and are held at the pressing temperature for a period of 0.1 s to 60 min, and wherein the copper alloy in the component after the pressing process has a microstructure with an average grain size of less than 100 µm in an area close to the surface.

2. Method according to claim 1, **characterised in that** the sulphur content in the alloy is 0.20% by weight ≤ S ≤ 0.65% by weight, in particular 0.23% by weight ≤ S ≤ 0.45% by weight, and preferably 0.25% by weight ≤ S ≤ 0.35% by weight.

3. Method according claim 1 or claim 2, **characterised in that** the zinc content in the alloy is 1.3% by weight ≤ Zn ≤ 3.5% by weight, preferably 1.5% by weight ≤ Zn ≤ 3.3% by weight, particularly preferably 2.0% by weight ≤ Zn ≤ 3.0% by weight.

4. Method according to any one of the preceding claims, **characterised in that** the phosphorous content in the alloy is 0.015% by weight ≤ P ≤ 0.1% by weight, in particular 0.02% by weight ≤ P ≤ 0.08% by weight, and preferably 0.04% by weight ≤ P ≤ 0.06% by weight.

5. Method according to any one of the preceding claims, **characterised in that** the tin content in the alloy is 3.0% by weight ≤ Sn ≤ 4.8% by weight, preferably 3.0% by weight to 4.5% by weight, particularly preferably 3.5% by weight to 4.0% by weight.

6. Method according to any one of the preceding claims, **characterised in that** copper is included in the lead-free copper alloy in an amount of more than 90% by weight.

7. Method according to any one of the preceding claims, **characterised in that** the pressing temperature in step (c) is in a range from 800°C to 880°C and particularly preferably in a range from 815°C to 850°C.

8. Method according to any one of the preceding claims, **characterised in that** the press blanks are heated to the pressing temperature before step (c) and held at the pressing temperature for a period of 2 s to 10 min.

9. Component for media-carrying gas or water pipes, in particular a fitting or valve for drinking water pipes, produced by a method according to any one of claims 1 to 8.

10. Component for media-carrying gas or water pipes according to claim 9, **characterised in that** the copper alloy in the component after the pressing process has a microstructure with an average grain size of less than 100 µm in an area close to the surface.

11. Component according to claim 9 or claim 10, **characterised in that** the component has a wall thickness in the range from 0.5 mm to 6.0 mm, preferably in the range from 1.0 mm to 4.0 mm, at least in sections.

## Revendications

1. Procédé de fabrication de composants pour des conduites de gaz ou d'eau transportant des fluides, notamment de raccords ou de robinetteries pour des conduites d'eau potable, qui sont constitués au moins en partie d'un alliage de cuivre qui comprend les composants d'alliage suivants en % en poids :
3,0 % en poids ≤ Sn ≤ 8 % en poids ;
1,3 % en poids ≤ Zn ≤ 6 % en poids ;
0,1 % en poids ≤ S ≤ 0,7 % en poids ;
éventuellement pas plus de 0,2 % en poids de phosphore ;
éventuellement pas plus de 0,1 % en poids d'antimoine ; et
éventuellement du fer, du zirconium et/ou du bore, seuls ou en combinaison avec deux ou plusieurs desdits éléments, pas plus de 0,3 % en poids ; et
des impuretés inévitables, le plomb étant contenu en une quantité ne dépassant pas 0,25 % en poids et le nickel avec une teneur en nickel ne dépassant pas 0,4 % en poids, en tant qu'impuretés inévitables, et le reste étant du cuivre ;
le procédé comprenant les étapes suivantes :
(a) la fusion de l'alliage de cuivre ;
(b) la fabrication d'ébauches de compression à partir de l'alliage de cuivre ; et
(c) la compression des ébauches de compression à une température de compression appropriée en les composants,
la température de compression se situant dans une plage de 750 °C à 900 °C et les ébauches de compression étant chauffées avant l'étape (c) à la température de compression et étant maintenues à la température de compression pendant une durée de 0,1 s à 60 min, et l'alliage de cuivre dans le composant présentant, après le processus de compression, dans une zone proche de la surface, une structure avec une taille de grain moyenne inférieure à 100 µm.

2. Procédé selon la revendication 1, **caractérisé en ce que** la proportion de soufre dans l'alliage est de 0,20 % en poids ≤ S ≤ 0,65 % en poids, notamment 0,23 % en poids ≤ S ≤ 0,45 % en poids, et de préférence 0,25 % en poids ≤ S ≤ 0,35 % en poids.

3. Procédé selon la revendication 1 ou la revendication 2, **caractérisé en ce que** la proportion de zinc dans l'alliage est de 1,3 % en poids ≤ Zn ≤ 3,5 % en poids, de préférence de 1,5 % en poids ≤ Zn ≤ 3,3 % en poids, de manière particulièrement préférée de 2,0 % en poids ≤ Zn ≤ 3,0 % en poids.

4. Procédé selon l'une quelconque des revendications précédentes, **caractérisé en ce que** la proportion de phosphore dans l'alliage est de 0,015% en poids ≤ P ≤ 0,1% en poids, notamment 0,02% en poids ≤ P ≤ 0,08% en poids, et de préférence 0,04% en poids ≤ P ≤ 0,06% en poids.

5. Procédé selon l'une quelconque des revendications précédentes, **caractérisé en ce que** la teneur en proportion d'étain dans l'alliage est de 3,0 % en poids ≤ Sn ≤ 4,8 % en poids, de préférence de 3,0 % en poids à 4,5 % en poids, de manière particulièrement préférée de 3,5 % en poids à 4,0 % en poids.

6. Procédé selon l'une quelconque des revendications précédentes, **caractérisé en ce que** le cuivre est contenu dans l'alliage de cuivre sans plomb en une quantité supérieure à 90 % en poids.

7. Procédé selon l'une quelconque des revendications précédentes, **caractérisé en ce que** la température de compression dans l'étape (c) se situe dans une plage de 800 °C à 880 °C et, de préférence, dans une plage de 815 °C à 850 °C.

8. Procédé selon l'une quelconque des revendications précédentes, **caractérisé en ce que** les ébauches de compression sont chauffées à la température de compression avant l'étape (c) et sont maintenues à la température de compression pendant une durée de 2 s à 10 min.

9. Composant pour conduites de gaz ou d'eau transportant des fluides, notamment raccord ou robinetterie pour conduites d'eau potable, fabriqué par un procédé selon l'une quelconque des revendications 1 à 8.

10. Composant pour conduites de gaz ou d'eau transportant des fluides selon la revendication 9, **caractérisé en ce que** l'alliage de cuivre dans le composant présente, après le processus de compression, dans une zone proche de la surface, une structure avec une taille moyenne de grain inférieure à 100 µm.

11. Composant selon la revendication 9 ou la revendication 10, **caractérisé en ce que** le composant présente, au moins par sections, une épaisseur de paroi dans la plage de 0,5 mm à 6,0 mm, de préférence dans la plage de 1,0 mm à 4,0 mm.
